# EUROPÄISCHE PATENTANMELDUNG

(11) **EP 4 714 318 A1**
(43) Veröffentlichungstag der Anmeldung: **25.03.2026**
(21) Anmeldenummer: 24201916.4
(22) Anmeldetag: 23.09.2024
(51) Int. Cl.: A47K 3/00

(54) **WANNENDICHTBAND UND VERWENDUNG DAVON**

(71) Anmelder: Sanipat GmbH, 6045 Meggen (CH)
(72) Erfinder: Gassmann, Urs, 6343 Buonas (CH)
(74) Vertreter: Prins Intellectual Property AG

(57) **Zusammenfassung**

Bei einem Wannendichtband (1) zum Abdichten eines Wannenrands (2) einer Dusch- oder Badewanne gegenüber einer Anschlusswand (3) und/oder einem Anschlussboden (4), umfassend ein dehnbares Trägerband (10) mit einer wannenseitigen Vorderseite (11) und einer wannenabgewandten Rückseite (12); wobei das Wannendichtband (1) einen ersten, unteren Bereich (13) und einen zweiten, oberen Bereich (14) definiert, die sich in Längsrichtung (L) erstrecken und wobei der erste, untere Bereich (13) etwa ein Fünftel bis etwa die Hälfte des Wannendichtbandes (1) ausmacht; wobei das Wannendichtband (1) auf der wannenseitigen Vorderseite (11) im ersten, unteren Bereich (13) eine vorderseitige Kleberschicht (20) zur Befestigung des Wannendichtbands (1) am Wannenrand (2) aufweist; wobei die vorderseitige Kleberschicht (20) mit einer abziehbaren, vorderseitigen Abziehfolie (21) versehen ist; wobei das Wannendichtband (1) auf der wannenseitigen Vorderseite (11) im zweiten, oberen Bereich (14) keine vorderseitige Kleberschicht aufweist; ist es vorgesehen, dass das Wannendichtband (1) eine rückseitige Kleberschicht (30) aufweist, welche sich über die gesamte Rückseite des Wannendichtbands (1) erstreckt; und dass die rückseitige Kleberschicht (30) mit einer ersten, unteren abziehbaren Abziehfolie (31) und einer separaten zweiten, oberen abziehbaren Abziehfolie (32) versehen ist, die jeweils den ersten, unteren Bereich (13) des Wannendichtbandes (1) respektive den zweiten, oberen Bereich (14) des Wannendichtbandes (1) abdecken, und wahlweise vom Wannendichtband (1) abziehbar sind, um einen ersten, unteren Bereich (33) der rückseitigen Kleberschicht (30) resp. einen zweiten, oberen Bereich (34) der rückseitigen Kleberschicht (30) freizugeben.

## Beschreibung

### Technisches Gebiet

Die Erfindung betrifft ein Wannendichtband zum Abdichten eines Wannenrands einer Dusch- oder Badewanne gegenüber einer Anschlusswand und/oder einem Anschlussboden.

### Technischer Hintergrund

Im Sanitärbereich werden zur Abdichtung bei Bade- oder Duschwannen sogenannte Wannen- oder Zargendichtbänder eingesetzt, die einen Wannenrand einer Dusch- oder Badewanne gegenüber einer Anschlusswand und/oder einem Anschlussboden abdichten. Ein solches Dicht- und Montageband ist beispielsweise aus EP2405067, EP3372131 oder EP3372133 derselben Anmelderin bekannt.

Wannendichtbänder sind also hinlänglich bekannt und weisen üblicherweise im Querschnitt einen Dicht- und Montageband-Grundkörper bzw. Trägermaterial auf, der bzw. das einen ersten, unteren Bereich mit einer Vorder- bzw. wannenseitigen Klebefläche ausbildet und einen zweiten, oberen Bereich mit einer rück- bzw. wandseitigen Klebefläche. In manchen Ausführungsformen weist der zweite, obere Bereich rückseitig keine Klebefläche resp. Kleberschicht auf, sondern ist derart beschaffen, dass er in eine flüssig auf die Anschlusswand oder den Anschlussboden aufgetragene Verbundabdichtung oder Dichtschlämme eingearbeitet und so befestigt werden kann. Auch bei den Ausführungsformen mit Klebefläche, wird der obere Bereich üblicherweise in eine flüssig aufgetragene Verbundabdichtung oder Dichtschlämme eingearbeitet. Die Verbundabdichtung oder Dichtschlämme wird meist zweilagig aufgetragen. Eine erste Lage wir auf die Anschlusswand oder den Anschlussboden aufgetragen, bevor die Wanne zusammen mit dem Wannendichtband an der gewünschten Stelle platziert wird. Eine zweite Lage wird anschliessend auf den wannenseitig oberen Bereich des Wannendichtband und die Anschlusswand resp. den Anschlussboden aufgetragen.

Die Wannendichtbänder sind üblicherweise 1 bis 4.5 m lang und etwa 65 bis 150 mm, vorzugsweise etwa 120 mm, breit. Die Dicke beträgt je nach Bereich und optional angebrachten Schalldämmstreifen etwa 0.5 bis 5 mm. Sie werden aufgerollt verpackt geliefert, zusammen mit allfälligen weiteren Elementen und einer Montageanleitung.

Die Wannendichtbänder werden beim korrekten Einbau mit dem ersten bzw. unteren Bereich am Wannenrand, d.h. einer Abbordung des Wannenrands oder unter den Wannenrand und mit einem zweiten bzw. oberen Bereich am Gebäudeteil z.B. einer Anschlusswand oder ein Anschlussboden wasserdicht befestigt. Die Anschlusswand oder der Anschlussboden wird dann üblicherweise mit Fliesen oder anderen Belägen versehen. Die Fuge zwischen den Fliesen und dem Wannenrand wird mit einer elastischen Dichtmasse (meist Silikon) versehen. Das hinter dieser sogenannten Silikonfuge liegende Wannendichtband verhindert ein Eindringen von Feuchtigkeit und Wasser hinter die Bade- oder Duschwanne auch bei defekter Silikonfuge. Um eine Beschädigung der Dichtung beim Ersetzen von defekten Silikonfugen zu vermeiden, wurde das Dicht- und Montageband aus EP2405067 erstmals mit einem Schnittbeschädigungsschutz versehen.

Im eingebauten Zustand ist das Wannendichtband demnach mit dem unteren Bereich am Wannenrand befestigt und mit dem oberen Bereich an der Anschlusswand, so dass ein Übergangsbereich zwischen den oberen und unteren Bereich auf der Höhe der Fuge zwischen dem Wannenrand und der an der Anschlusswand angebrachten Fliese zu liegen kommt. Um beim allfälligen Absenkbewegungen der Wanne dennoch eine zuverlässige Dichtung zu erzielen resp. ein Abreissen des Wannendichtbands von der Wanne oder des Gebäudeteils zu vermeiden, sind die Wannendichtbänder wenigstens im Übergangsbereich dehnbar ausgebildet und der untere, wannenseitig befestigte Bereich ist nicht an der Anschlusswand angeklebt. Auf diese Weise kann der Übergangsbereich Absenkbewegungen aufnehmen, ohne dass das Wannendichtband abreist.

Das Wannendichtband aus EP2405067 ist zudem geeignet, um Eckbereiche bei Wand-Wand-Übergängen zuverlässig abzudichten. Für andere komplexere Eckbereich-Situationen wie bei Boden-Wand- oder Boden-Boden-Übergängen, bei denen das Dicht- und Montageband eingeschnitten werden muss, sind zum Beispiel aus EP2570062, EP2604160, EP3150093 und EP3363338 starre oder flexible Eckprofile oder Dichtecken bekannt.

### Darstellung der Erfindung

Es besteht ein ständiger Bedarf das Wannendichtband zu optimieren, so dass es für möglichst viele Einbausituation geeignet ist und gleichzeitig einfach zu verwenden bleibt. Eine Aufgabe der Erfindung besteht demnach daher darin, ein Wannendichtband für möglichst viele Einbausituationen bereitzustellen, um das Montieren des Wannendichtbands beim Setzen der Dusch- oder Badewanne zu erleichtern.

Diese Aufgabe wird durch ein Wannendichtband mit den Merkmalen des Anspruchs 1 gelöst.

Das Wannendichtband zum Abdichten eines Wannenrands einer Dusch- oder Badewanne gegenüber einer Anschlusswand und/oder einem Anschlussboden, umfasst ein dehnbares Trägerband mit einer wannenseitigen Vorderseite und einer wannenabgewandten Rückseite. Das Wannendichtband definiert einen ersten, unteren Bereich und einen zweiten, oberen Bereich, die sich in Längsrichtung erstrecken und der erste, untere Bereich etwa ein Fünftel bis etwa die Hälfte (ausgehend vom unteren Rand) des Wannendichtbandes ausmacht. Der zweite, obere Bereich kann etwa ein Viertel bis etwa die Hälfte (ausgehend vom oberen Rand) des Wannendichtbandes ausmachen.

Das Wannendichtband weist auf der wannenseitigen Vorderseite im ersten, unteren Bereich eine vorderseitige Kleberschicht zur Befestigung des Wannendichtbands am Wannenrand auf. Die vorderseitige Kleberschicht ist mit einer abziehbaren, vorderseitigen Abziehfolie versehen. Auf der wannenseitigen Vorderseite weist das Wannendichtband ausserhalb des ersten, unteren Bereichs keine Kleberschicht auf. Die vorderseitige Kleberschlicht reicht vorzugsweise bis an die unterste Kante des Wannendichtbandes, damit bei Einbausituationen in Eckbereichen eine zuverlässige Dichtung erreicht wird.

Das Wannendichtband weist weiter eine rückseitige Kleberschicht aufweist, welche sich über die gesamte Rückseite des Wannendichtbands (d.h. vom unteren bis zum oberen Rand des Trägerbandes resp. Wannendichtbandes) erstreckt. Die rückseitige Kleberschicht ist mit einer ersten, unteren abziehbaren Abziehfolie und einer separaten zweiten, oberen abziehbaren Abziehfolie versehen, die jeweils den ersten, unteren Bereich des Wannendichtbandes respektive den zweiten, oberen Bereich des Wannendichtbandes abdecken, und wahlweise vom Wannendichtband abziehbar sind, um (nur) einen ersten, unteren Bereich der rückseitigen Kleberschicht respektive (nur) einen zweiten, oberen Bereich der rückseitigen Kleberschicht freizugeben.

Die Begriffe «wannenseitig», «wannenabgewandt», «oben», «unten» beziehen sich im Wesentlichen auf den Einbauzustand (üblicherweise einen vertikalen Einbauzustand) eines Wannendichtbands. Es ist hinlänglich bekannt, wie solche Wannendichtbänder beim Abdichten gegenüber Anschlusswänden oder Anschlussböden eingesetzt werden. Eine vorder- oder rückseitige Kleberschicht des Wannendichtbands dient der Befestigung des Wannendichtbands an einer Wanne resp. einem Gebäudeteil. Sie definiert entsprechend eine äusserste Lage des Wannendichtbandes vor dem Einbau, die lediglich noch mit der Abziehfolie bedeckt ist.

Beim Setzen eine Dusch- oder Badewanne resp. bei Abdichten eines Wannenrands gegenüber dem Gebäude wird das Wannendichtband mit dem ersten, unteren Bereich an einer Abbordung des Wannenrandes befestigt, indem die vorderseitige Abziehfolie entfernt wird und mit der vorderseitigen Kleberschicht eine wasserdichte Verbindung zum Wannenrand hergestellt wird. Das Wannendichtband kann mit der vorderseitigen Kleberschicht direkt an den Wannenrand geklebt werden, oder der Wannenrand wird zuvor mit einem, vorzugsweise in einem Bausatz mit dem Wannendichtband mitgelieferten, Schalldämmstreifen oder Distanzband versehen. Anschliessend wir die Wanne an die gewünschte Stelle gesetzt und das Wannendichtband wir mit dem zweiten, oberen Bereich am Gebäude befestigt. Sollten zusätzlichen Elemente wie Schalldämmstreifen oder Distanzband verwendet werden, müssen diese entsprechend wasserdicht ausgeführt und montiert sein.

Bei einer Einbausituation in eine Ecke mit zwei Anschlusswänden, wird das Wannendichtband um die Wannenecke geführt. An der Wannenecke können Eckstücke angebracht werden, um allfällige Rundungen der Wannenecke auszugleichen. Auf diese Weise wird eine zuverlässige Dichtung entlang der Wannenränder und um die Wannenecke gewährleistet.

Bei einer Einbausituation mit einem Eckbereich aus Anschlusswand und Anschlussboden, bei welcher eine Unterseite des Wannenrandes auf der Höhe des Anschlussbodens liegt, kommen üblicherweise zwei Wannendichtbänder (oder zwei Stücke eines Wannendichtbandes) zum Einsatz. Ein erstes Wannendichtband wird wie voran erläutert vertikal an einer Abbordung des wandseitigen Wannenrands festgeklebt, und zwar in etwa bündig mit dem bodenseitigen Wannenrand. Ein zweites Wannendichtband wird mit dem ersten, unteren Bereich - nach abziehen der vorderseitigen Abziehfolie - mit der vorderseitigen Kleberschicht horizontal an die Unterseite des bodenseitigen Wannenrandes geklebt. Auch hier bildet die Kleberschicht eine Wasserdichte Verbindung mit dem Wannenrand und es kann optional ein Schalldämmstreifen dazwischen geklebt werden. Das zweiten Wannendichtband wird derart bemessen, dass es über den wandseitigen Wannenrand hinausragt und in diesem Bereich vertikal nach oben gelegt wird. Zuvor werden im Eckbereich beim ersten Wannendichtband die rückseitige erste, untere Abziehfolie und die rückseitige zweite, obere Abziehfolie teilweise - um wenige Zentimeter - abgezogen, um die rückseitige Klebefläche freizugeben. Der abgezogene Bereich der ersten, unteren Abziehfolie kann abgeschnitten werden. Das nach oben gelegte zweite Wannendichtband wird anschliessend mit der vorderseitigen Klebefläche auf die freigelegte rückseitige Klebefläche des ersten Wannendichtbandes geklebt. Nachdem die Wanne an die gewünschte Stelle gesetzt ist, werden beim ersten Wannendichtband und bei zweiten Wannendichtband jeweils die rückseitigen zweiten, oberen Abziehfolien ganz abgezogen, um die jeweiligen Wannendichtbänder an die Anschlusswand resp. an den Anschlussboden zu kleben. Auf diese Weise wird eine zuverlässige Dichtung entlang der Wannenränder und in der Ecke bei einem Wand-Boden-Anschluss gewährleistet.

Bei einer Einbausituation mit einem Eckbereich aus zwei Anschlussböden, bei welcher eine Unterseite des Wannenrandes auf der Höhe der Anschlussböden liegt, kommen ebenfalls zwei Wannendichtbänder zum Einsatz. In dieser Einbausituation werden beide Wannendichtbänder horizontal mit der vorderseitigen Klebefläche im ersten, unteren Bereich unter den Wannenrand geklebt. Die beiden Wannendichtbänder sind derart bemessen, dass sie über den Eckbereich hinausragen und einander überlappen. Beim oberen Wannendichtband wir die rückseitige erste, untere Abziehfolie und die rückseitige zweite, obere Abziehfolie teilweise - um wenige Zentimeter - abgezogen, um die rückseitige Klebefläche freizugeben. Der abgezogene Bereich der ersten, unteren Abziehfolie kann abgeschnitten werden. Die freigegebene rückseitige Klebefläche des oberen Wannendichtbands wird auf die Vorderseite des unteren Wannendichtbandes geklebt, wobei deren vorderseitige Klebefläche ebenfalls durch Abziehen der vorderseitigen Abziehfolie freigegeben wurde. Nachdem die Wanne an die gewünschte Stelle gesetzt ist, werden beim den beiden Wannendichtbändern jeweils die rückseitigen zweiten, oberen Abziehfolien ganz abgezogen, um die jeweiligen Wannendichtbänder an die entsprechenden Anschlussböden zu kleben. Auf diese Weise wird eine zuverlässige Dichtung entlang der Wannenränder und in der Ecke bei einem Boden-Boden-Anschluss gewährleistet.

Alternativ zu den beschriebenen Einbausituationen in Eckbereichen, können auch für die verschiedenen Ecken vorgefertigte Eckelemente oder Eckstücke verwendet werden. Diese werden ebenfalls im Eckbereich an den Wannenrand geklebt und überlappen das zuvor angebrachte Wannendichtband. Mit der rückseitigen Kleberschicht kann eine zuverlässig wasserdichte Verbindung zum Eckelement oder Eckstück hergestellt werden. Die verschiedenen Teile müssen dabei nicht mehr umständlich in verschiedene Lagen einer Dichtschlämme eingearbeitet werden.

Weiter können über die rückseitige Kleberschicht auch zwei Wannendichtbänder miteinander verbunden werden, falls ein (Rest-)Stück nicht für eine gesamte Länge eines Wannenrands reichen würde.

Das Wannendichtband ist daher ohne zusätzliche Elemente in wenigstens drei unterschiedlichen Einbausituationen einsetzbar.

Beim Einbau einen Wannendichtbands können und sollen weiterhin die bekannten Eckausgleichsstücke oder Eckausgleichsprofile zum Ausgleichen der Wannenrundung im Eckbereich verwendet werden. Ein solches Eckausgleichsprofile ist beispielsweise in P210706CH offenbart.

Typisch für Wannendichtbänder ist eine vorderseitige resp. wannenseitige Kleberschicht, welche nur in einem unteren Bereich (ca. ein Fünftel bis etwa die Hälfte) vorhanden ist. Der obere Bereich weist keine Kleberschicht auf, weil diese die Handhabung erschweren würde und keine Funktion hätte. Unter einer Kleberschicht oder Klebefläche wird eine Oberfläche verstanden, welche klebend ist und ohne zusätzlichen Haftvermittler an einer anderen geeigneten Oberfläche befestigt werden kann. Die Kleberschichten des Wannendichtbandes können jeweils ein separat, auf das Trägerband aufgetragener Kleber, z.B. ein Butylkleber, sein. Besteht das Trägerband aus selbstklebendem Material, z.B. basierend auf Butyl oder anderen geeigneten Klebstoffen, kann die Oberfläche aufgrund des Materials bereits klebend sein. In den Bereichen, in welchen die Vorderseite des Wannendichtbandes nicht klebend sein soll, ist das Material entsprechend behandelt oder mit einer nicht klebenden Materialschicht kaschiert, z.B. vlieskaschiert. Die klebenden Flächen sind mit den jeweiligen Abdeckfolien versehen.

Wannendichtbänder werden oft in eine Verbundabdichtung oder Dichtschlämme eingearbeitet. Die Verbundabdichtung oder Dichtschlämme ist keine vorder- oder rückseitige Kleberschicht des Wannendichtband und wird hier auch nicht als solche verstanden, da diese üblicherweise nach dem Trocken nicht klebend sind resp. keine klebrigen Eigenschaften aufweisen. Auch ein Putz oder Zement ist ebenfalls keine Kleberschicht im Sinne von Wannendichtbändern.

Bevorzugte Ausführungsarten der Erfindung sind in den abhängigen Ansprüchen angegeben.

Wannendichtbänder weisen typischerweise eine Länge von 1 bis 4.5 m und eine Höhe/Breite von ca. 65 bis 150 mm, vorzugsweise etwa 120 mm. Die Dicke beträgt je nach Bereich und optional angebrachten Schalldämmstreifen etwa 0.5 bis 5 mm. Sie werden üblicherweise aufgerollt verpackt geliefert, zusammen mit allfälligen weiteren Elementen und einer Montageanleitung.

In einigen Ausführungsformen kann das Wannendichtband zwischen dem ersten, unteren Bereich (d.h. der Bereich, der zur Befestigung an der Wanne vorgesehen ist) und dem zweiten, oberen Bereich (d.h. der Bereich, der zur Befestigung an der Anschlusswand oder am Anschlussboden vorgesehen ist) einen Übergangsbereich aufweisen, welcher keine vorderseitige Klebefläche aufweist. Der Übergangsbereich erstreckt sich demnach in Längsrichtung zwischen dem ersten, unteren und dem zweiten, oberen Bereich. Im Einbauzustand ist das Wannendichtband mit dem ersten, unteren Bereich an der Wanne befestigt und mit dem zweiten, oberen Bereich an der Anschlusswand oder dem Anschlussboden. Der Übergangsbereich bildet den Übergang zwischen der vorderseitigen Befestigung an der Wanne und der rückseitigen Befestigung am Gebäude (Anschlusswand/Anschlussboden). Dieser Bereich muss fähig sein, gewisse Absetzbewegungen der Wannen gegenüber dem Gebäude aufzunehmen und typischerweise ist wenigstens dieser Bereich bei Wannendichtbändern dehnbar ausgestaltet. Zudem liegt der Übergangsbereich im Einbauzustand hinter der Silikonfuge zwischen Wannenrand und Wand- oder Bodenbelag.

In einigen Ausführungsformen kann die rückseitige erste, untere Abziehfolie den Übergangsbereich abdecken. In den meisten Einbausituation verbleibt die erste, untere Abziehfolie am Wannendichtband und gewährleistet dadurch, dass das Wannendichtband im rückseitigen ersten, unteren Bereich und im Übergangsbereich nicht verklebt ist und somit die Dehnbarkeit im Übergangsbereich erhalten bleibt.

In einigen Ausführungsformen kann die rückseitige zweite, obere Abziehfolie die rückseitige erste, untere Abziehfolie um etwa einen Millimeter überlappen. Dies vereinfacht die Handhabung des Wannendichtbandes in die zweite, obere Abziehfolie, welche beim Einbau immer entfernt wird, leicht greifbar ist.

Der rückseitig obere Bereich der Kleberschicht definiert also den zweiten, oberen Bereich des Wannendichtbandes. Die vorderseitige Kleberschicht definiert den ersten, unteren Bereich. Die rückseitige untere Kleberschicht definiert den ersten, unteren Bereich und Übergangsbereich des Wannendichtbandes und hat daher eine grössere Ausdehnung als die vorderseitige, untere Kleberschicht.

In einigen Ausführungsformen kann das Trägerband im Übergangsbereich und wenigstens in an den Übergangsbereich angrenzenden Abschnitten des ersten, unteren Bereichs und des zweiten, oberen Bereichs wasserdicht sein. Es ist nicht zwingend notwendig das das gesamte Wannendichtband wasserdicht ist. Der obere Bereich kann vereinzelte Löcher oder Ausstanzungen aufweisen, welche eine zusätzliche Verankerung in einer Verbundabdichtung bilden. Wasserdichte Eigenschaften, die sich wenigstens in den angrenzenden Abschnitten des ersten, unteren und zweiten, oberen Bereichs erstrecken garantieren jedoch eine zuverlässige Dichtheit des Wannendichtbandes.

In einigen Ausführungsformen kann das Trägerband aus einem einzigen durchgehenden, Materialstreifen oder aus mehreren miteinander überlappend verklebten oder verschweissten Materialstreifen bestehen.

In einigen Ausführungsformen kann der Materialstreifen aus dehnbarem Material gefertigt sein oder die mehreren Materialstreifen dehnbar miteinander verklebt sein. Um wenigstens eine dehnbaren Übergangsbereich zu gewährleisten, kann das Trägerband aus dehnbarem Material gefertigt sein oder wenn nicht dehnbare Materialien gewählt sind, können beispielsweise zwei Streifen im Übergangsbereich überlappend miteinander verklebt sein. Der Kleber, z.B. ein Butylkleber, wird so gewählt, dass er Dehnungen quer zur Längsrichtung, indem die beiden Streifen relativ zueinander verschoben werden, aufnehmen kann, ohne dass die Dichtigkeit verloren geht.

In einigen Ausführungsformen kann das Trägerband an der Vorderseite, an der Rückseite oder zwischen überlappenden Materialstreifen mindestens ein sich in Längsrichtung erstreckendes (längliches oder streifenförmiges) Funktionselement ausgewählt aus der Gruppe von Schnittbeschädigungsschutz, Schallschutz, Kapillarschutz, Wannenschutz, Hinterfütterung, Vlieslagen, Aufdoppelungsband, Kompressionsband, Quellband oder Kombinationen davon aufweisen. Die Funktionselemente können bereits am Wannendichtband befestigt sein, oder sie können in Form eines Bausatzes zusammen mit dem Wannendichtband geliefert werden und nachträglich auf der Baustelle je nach Bedarf montiert werden.

Ein Schnittbeschädigungsschutz kann streifenförmig oder profilförmig sein. Er wird eingesetzt, um das Wannendichtband vor ungewollten Beschädigungen beim Ersetzen von Silikonfugen zu schützen. Der Schnittbeschädigungsschutz ist dabei im Bereich der Silikonfuge angeordnet und reicht für einen optimalen Schutz im Einbauzustand über die Ränder der Silikonfuge hinweg. Mit anderen Worten ist der Schnittbeschädigungsschutz im Übergangsbereich des Wannendichtband angeordnet und überlappt (nur) teilweise mit dem ersten, unteren Bereich und mit dem zweiten, oberen Bereich des Wannendichtbandes.

Ein effizienter Schnittbeschädigungsschutz wird erreicht, indem der Schnittbeschädigungsschutz im Einbauzustand des Wannendichtbands hinter der Fuge mit der elastischen Dichtmasse (Silikonfuge) liegt. Dies kann erreicht werden, indem der Schnittbeschädigungsschutz am Wannendichtband vormontiert ist oder als separater Schnittbeschädigungsschutz einem Bausatz mit Wannendichtband und gegebenenfalls weiteren Element beiliegt. Der Schnittbeschädigungsschutz kann entsprechend in das Wannendichtband integriert, aufgeklebt, eingesteckt oder eingelegt sein. Der Schnittbeschädigungsschutz kann auch während dem Einbau aufgeklebt, eingesteckt, eingelegt oder lose aufgelegt werden, z.B. zwischen Wannenrand und Wannendichtband. Ein Schnittbeschädigungsschutz kann zu dessen Befestigung, während dem Einbau auch in eine über dem Wannendichtband angebrachte Dichtschlämme eingelegt werden.

Damit ein Schnittbeschädigungsschutz als Schutz vor unerwünschten Zerstörungen des Wannendichtband beim Ersetzen von Silikonfugen dient, muss er genügend stark sein, um einem scharfen Messer (Cutter, Teppichmesser) - wie es auf Baustellen häufig Verwendung findet - stand zu halten. Materialien, die einem scharfen Messer, auf welches mit wenigstens etwa 800 g, vorzugsweise wenigstens 2 kg, gedrückt wird, nicht standhalten, gelten nicht als Schnittbeschädigungsschutz.

Das Material für den Schnittbeschädigungsschutz kann Metall oder Kunststoff sein. Der Schnittbeschädigungsschutz kann als Folie, Gitter, Gewirke, Gewebe ausgestaltet sein. Ein am Wannendichtband integrierter Schnittbeschädigungsschutz sollte flexibel sein, so dass er zusammen mit dem Wannendichtband von Hand um einen Wannenecke gelegt werden kann. Ein separater, während dem Einbau angebrachter Schnittbeschädigungsschutz kann auch starr sein und entsprechend abgelängt an der gewünschten Position angeordnet werden.

Ein Schallschutz wird üblicherweise im ersten, unteren Bereich vorderseitig oder rückseitig angeordnet. Er kann auch im Wannendichtband oder im Trägerband zwischen mehreren Lagen integriert sein. Der Schallschutz dämmt Schwingungen der Wanne und reduziert deren Übertragung auf das Gebäude. Eine geeignet dick gewählte Butyl-Schicht als vorderseitige Kleberschicht (2 bis 4 mm) kann gleichzeitig als Schallschutz dienen. Der Schallschutz kann auch als separates Element eines Baukastens beiliegen und vor der Montage des Wannendichtbandes an den Wannenrand geklebt werden. In diesem Fall muss das Material wasserdicht sein. Andere nicht wasserdichte Materialien können zur rückseitigen Anordnung verwendet werden.

Ein Kapillarschutz wird zwischen dem Wannendichtband und dem Wand- oder Bodenbelag angeordnet und verhindert ein Eindringen oder Aufsteigen von Feuchtigkeit hinter den Wand- oder Bodenbelag, falls sich in der Silikonfuge kleine Risse bilden sollten.

Ein Wannenschutz wird üblicherweise auf der Oberseite des Wannenrand befestigt, um die Wanne beim Setzen und Verlegen des Wand- oder Bodenbelags zu schützen. Der Wannenschutz kann bereits am Wannendichtband befestigt sein oder als separates Element einem Baukasten beiliegen.

Ein Hinterfütterung wird im Einbauzustand vorderseitig vom Wannendichtband in der Fuge zwischen Wannenrand und Wand- oder Bodenbelag angeordnet. Er wird verwendet, um sicherzustellen, dass eine elastische Dichtmass (Silikonfuge) korrekt appliziert wird. Der Hinterfütterung kann mit dem Wannenschutz kombiniert sein, indem er lösbar mit diesem befestigt ist.

Vlieslagen können auf dem Trägerband aufkaschiert sein, um in gewünschten Bereichen die Dehnbarkeit einzuschränken oder die Oberfläche für das Anbringen eines Fliesenklebers zu optimieren.

In einigen Ausführungsformen kann die vorderseitige Abziehfolie und/oder die rückseitige Abziehfolie eine glatte, reibungsarme Oberfläche aufweisen. Dadurch wird der Reibungswiederstand z.B. gegenüber einem Gebäudeteil reduziert. Die Gefahr, dass das Wannendichtband beim Setzen der Wanne in die gewünschte Position durch "Hängenbleiben" an der allenfalls rauen Oberfläche des Gebäudeteils abreisst, wird so erheblich reduziert. Die Abziehfolie bildet also eine Gleitfläche gegenüber einem Gebäudeteil.

In einigen Ausführungsformen kann die vorderseitige Kleberschicht und/oder die rückseitige Kleberschicht ein Butylkleber sein. Die vorderseitige Kleberschicht und/oder die rückseitige Kleberschicht z.B. aus Butylkleber kann eine Schichtdicke von 0.3 mm bis 6 mm aufweisen. Ein dicke Kleberschicht kann gleichzeitig als Schallschutzelement dienen.

In einigen Ausführungsformen kann das Wannendichtband einen Schnittbeschädigungsschutz umfassen, welcher in Längsrichtung im Übergangsbereich und wenigstens in an den Übergangsbereich angrenzenden Abschnitten des ersten, unteren Bereichs und des zweiten, oberen Bereichs angeordnet oder anordnungsbar ist, so dass der Schnittbeschädigungsschutz das Trägerband im Übergangsbereich schützt.

In einigen Ausführungsformen kann der Schnittbeschädigungsschutz in Längsrichtung eine geschwächte Faltlinie aufweisen, entlang welcher der Schnittbeschädigungsschutz von Hand faltbar ist. Eine präzise Faltung wird erreicht, indem z.B. eine Wasserwaage oder ein ähnliches, längliches und stabiles Profil an die Faltlinie gelegt wird und das Wannendichtband zusammen mit dem Schnittbeschädigungsschutz von Hand gefaltet wird.

Eine Faltlinie ermöglicht Einbausituationen, bei denen die Höhe des Anschlussbodens im Bereich des seitlichen Wannenrandes liegt. In diesen Einbausituation wird das Wannendichtband mit dem ersten, unteren Bereich an der Abbordung des Wannenrandes vertikal und anschliessen mit dem zweiten, oberen Bereich horizontal auf dem Anschlussboden horizontal befestigt. Dabei wird ein vorhandener Schnittbeschädigungsschutz um 90° entlang der Längsrichtung über einen Bodenkante gelegt oder gefaltet. Die Faltlinie kann in etwa mittig resp. in einem mittleren Bereich des Schnittbeschädigungsschutzes angeordnet sein. Die Schwächung entlang der Faltlinie kann erreicht werden, in dem das Material perforiert oder verjüngt wird. Die Faltlinie resp. die Schwächung sollte jedoch ebenfalls dem Druck durch ein scharfes Messer standhalten. Eine Schwächung kann beispielsweise durch Perforierung oder Pressung erreicht werden.

In einigen Ausführungsformen kann das Wannendichtband im zweiten, oberen Bereich auf der Vorderseite (wannenseitig) oder Rückseite (wannenabgewandt) wenigstens eine Markierung in Längsrichtung aufweisen, welche eine vorbestimmte Höhe zwischen Faltlinie und Markierung definiert resp. angibt. Die Markierung hilft dabei dem Monteur der Wannen die korrekte Höhe für die Befestigung des Wannendichtbandes an einer Abbordung der Wanne zu bestimmen, indem das Wannendichtband mit der Markierung bündig zur Oberfläche des Wannenrands befestigt wird. Die Faltlinie liegt dabei um die vorbestimmte Höhe tiefer, welche im Einbauzustand der Oberfläche des Anschlussbodens entspricht.

In einigen Ausführungsformen kann das Wannendichtband auf der Vorder- oder Rückseite eine Faltlinienmarkierung aufweisen, welche exakt auf der Höhe der Faltlinie des Schnittbeschädigungsschutzes liegt. Die Faltlinienmarkierung erleichtert eine korrekte Positionierung einer Wasserwaage oder eines ähnlichen, länglichen und stabilen Profils an die Faltlinie. Die Faltlinienmarkierung dient zusätzlich der korrekten Positionierung des Wannendichtbandes beim vertikalen Einbau, indem das Wannendichtband mit der Faltlinienmarkierung auf der Höhe der Oberfläche des Wannenrands befestigt wird. Auf diese Weise ist auch der Schnittbeschädigungsschutz korrekt positioniert.

Ein separater Wannenschutz kann auch als Markierung oder Lehre für das korrekte Anbringen des Wannendichtbandes am Wannenrand bei einem Bodenanschluss dienen. Der separate Wannenschutz kann eine definierte Höhe aufweisen und mit der Oberseite bündig zur Wannenoberseite am Wannenrand befestigt werden. Das Wannendichtband wir anschliessend unter den Wannenschutz geklebt und gefaltet, um es anschliessend am Anschlussboden zu befestigen. Der Wannenschutz kann eine oder mehrere Perforationslinien aufweisen, um dessen Höhe an die gewünschte Grösse anzupassen. Nach dem Verlegen des Bodenbelags, kann der Wannenschutz komplett entfernt werden oder ein unterer Streifen kann als Hinterfütterung in der Fuge verbleiben, indem er entlang einer Perforationslinie vom Rest des Wannenschutzes abgetrennt wird.

Die Faltlinie des Schnittbeschädigungsschutzes, die erwähnten Markierungen und der separate Wannenschutz können auch als eigenständige Erfindungen betrachtet werden, und zwar unabhängig von den beiden rückseitigen Abziehfolien.

Die Erfindung betrifft weiter eine Verwendung eines voran beschriebenen Wannendichtbands zum Setzen einer Bade- oder Duschwanne, wobei das Wannendichtband nach Entfernung der vorderseitigen Abziehfolie mit dem vorderseitigen ersten, unteren Bereich an eine Wanne geklebt wird und anschliessend mit dem rückseitigen zweiten, oberen Bereich an einen Gebäudeteil geklebt wird.

Die Erfindung betrifft weiter einen Bausatz zum Setzen einer Bade- oder Duschwanne umfassend ein voran beschriebenes Wannendichtband und mindestens ein Funktionselement ausgewählt aus der Gruppe von Schnittbeschädigungsschutz oder - Profil, Schallschutz, Kapillarschutz, Wannenschutz, Hinterfütterung oder Kombinationen davon aufweist.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung eines Wannendichtbandes;
- Fig. 2: eine perspektivische Ansicht des Wannendichtbandes aus Fig. 1 angeklebt an einem Wannenrand;
- Fig. 3: eine perspektivische Ansicht einer Einbausituation bei einem Boden-Wand-Anschluss;
- Fig. 4: eine perspektivische Ansicht einer Einbausituation bei einem Boden-Wand-Anschluss und einem Boden-Boden-Anschluss;
- Fig. 5: eine Schnittdarstellung eines Wannendichtbandes mit Schnittbeschädigungsschutz im Einbauzustand bei einem Wandschluss;
- Fig. 6: eine Schnittdarstellung eines Wannendichtbandes mit Schnittbeschädigungsschutz im Einbauzustand bei einem Wandschluss;
- Fig. 7: eine Draufsicht auf eine Wannendichtband mit Schnittbeschädigungsschutz und Faltlinie;
- Fig. 8: eine Schnittdarstellung des Wannendichtbandes aus Fig. 7 im Einbauzustand bei einem Bodenanschluss;
- Fig. 9: eine Draufsicht auf eine Wannendichtbands mit Schnittbeschädigungsschutz und Markierung;
- Fig. 10: eine Schnittdarstellung des Wannendichtbandes aus Fig. 8 im Einbauzustand bei einem Bodenanschluss vor dem Umlegen;
- Fig. 11: eine Schnittdarstellung eines Wannendichtbandes im Einbauzustand mit Wannenschutz.

### Wege zur Ausführung der Erfindung

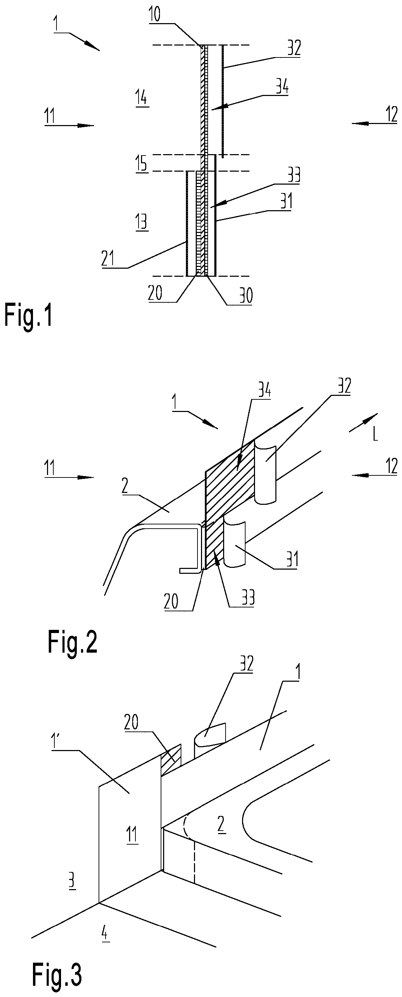

Die Figuren 1 bis 4 zeigen ein Wannendichtbande 1, wie es zum Abdichten von Dusch- oder Badewannen resp. eines Wannenrands 2 gegenüber einer Anschlusswand 3 oder einem Anschlussboden 4 Verwendung findet.

Das Wannendichtband 1 umfasst ein dehnbares Trägerband 10 mit einer wannenseitigen Vorderseite 11 und einer wannenabgewandten Rückseite 12.

Das Wannendichtband 1 weist ferner einen ersten, unteren Bereich 13 und einen zweiten, oberen 14 auf. Der erste, untere Bereich 13 dient der wasserdichten Befestigung des Wannendichtbandes 1 an einem Wannenrand 2 der Dusch- oder Badewanne. Dieser erste, untere Bereich 13 wird durch eine Kleberschicht 20 definiert, welche nur auf der Vorderseite 11 des Wannendichtbandes 1 in dem ersten, unteren Bereich 13 vorhanden ist. Die vorderseitige Kleberschicht 20 ist mit einer vorderseitigen Abziehfolie 21 bedeckt, welche vor der Befestigung des Wannendichtbands 1 am Wannenrand 2 vollständig abgezogen wird. Ansonsten weist das Wannendichtband 1 auf der Vorderseite keine freiliegende oder durch Abziehfolie bedeckte Kleberschicht auf.

Auf der Rückseite 12 weist das Wannendichtband 1 eine vollflächige rückseitige Kleberschicht 30 auf, welche sich über die gesamte Rückseite 12 des Wannendichtbandes erstreckt. Die rückseitige Kleberschicht 30 ist mit zwei separaten sich in Längsrichtung L erstreckenden Abziehfolien 31, 32 bedeckt. Eine erste, untere abziehbare Abziehfolie 31 bedeckt einen ersten, unteren Bereich 33 der rückseitigen Kleberschicht 30 im ersten, unteren Bereich 13 des Wannendichtbandes 1. Eine zweite, obere abziehbare Abziehfolie 32 bedeckt einen zweiten, oberen Bereich 34 der rückseitigen Kleberschicht 30 in einen zweiten, oberen Bereich 14 des Wannendichtbandes 1. Dieser zweite, obere Bereich 14, der quasi durch die zweite, obere Abziehfolie 32 definiert wird, dient der Befestigung des Wannendichtbands 1 an der Anschlusswand 3 oder dem Anschlussboden 4.

Der erste, untere Bereich 13 macht etwa ein Fünftel bis etwa die Hälfte des Wannendichtbandes aus.

Fig. 2 zeigt das Wannendichtband 1 wie es mit dem ersten unteren Bereich 13 resp. der vorderseitigen Kleberschlicht 20 an einer vertikalen Abbordung des Wannenrands 2 befestigt ist. Auf der Rückseite sind die beiden rückseitigen Abziehfolien 31, 32 teilweise abgezogen dargestellt, so dass sie den ersten, unteren Bereich 33 resp. den zweiten, oberen Bereich 34 der rückseitigen Kleberschicht 30 freilegen. Bei einem herkömmlichen Wandanschluss wird lediglich die zweite, obere Abziehfolie 32 abgezogen und das Wannendichtband 1 wird mit dem zweiten, oberen Bereich 14 an der Anschlusswand 3 befestigt (siehe Fig. 3).

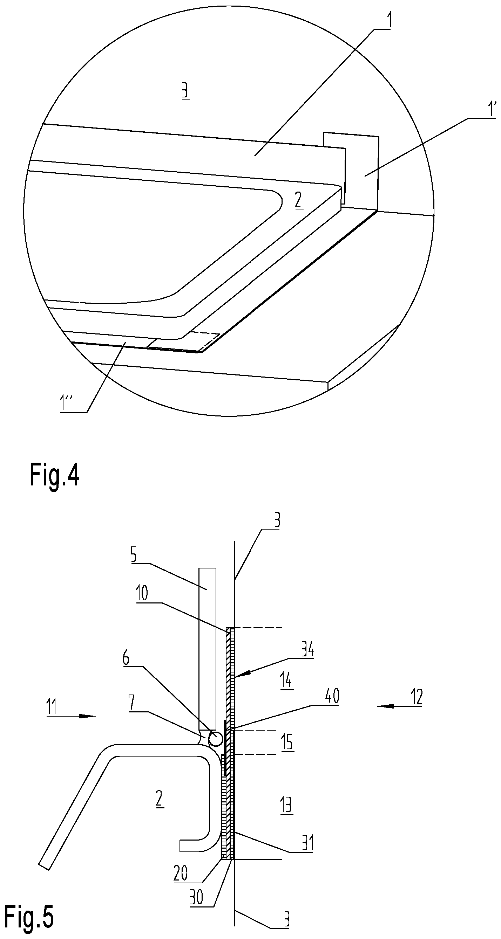

Fig. 3 und Fig. 4 zeigen eine Einbausituation einer Wanne in eine Ecke bestehend aus einer Anschlusswand 3 und einem Anschlussboden 4 (Boden-Wand-Anschluss). In der gezeigten Einbausituation ist die Unterseite des Wannenrands 2 bündig mit der Oberseite des Anschlussbodens 4. In einer solchen Einbausituation wird erst ein erstes Wannendichtband 1 mit der vorderseitigen Kleberschicht 20 auf die vertikale Abbordung des zur Anschlusswand 3 gerichteten Wannenrands 2 geklebt. Ein zweites Wannendichtband 1' wird anschliessend horizontal mit der vorderseitigen Kleberschicht 20 unter den zum Anschlussboden 4 gerichteten Wannenrand 2 geklebt und im Eckbereich vertikal nach oben gelegt. Dazu wird die erste, untere Abziehfolie 31 des ersten Wannendichtbandes 1 teilweise - um 3 bis 5 cm - abgezogen und abgeschnitten, um einen entsprechenden Bereich des ersten, unteren Bereichs 33 der rückseitigen Kleberschicht 30 freizulegen. Die zweite, obere Abziehfolie 32 wird entsprechend ebenfalls teilweise abgezogen. Das zweite Wannendichtband 1' wir nun mit der freiliegenden rückseitigen Kleberschicht 30 des ersten Wannendichtbandes 1 wasserdicht verklebt, um eine zuverlässige Dichtigkeit zu gewährleisten. Anschliessend werden bei beiden Wannendichtbändern 1, 1' die zweiten, oberen Abziehfolien 32 vollständig abgezogen, um die jeweiligen zweiten, oberen Bereiche 14 der Wannendichtbänder 1, 1' an den jeweiligen Anschlussflächen 3, 4 zu befestigen. Ein allfälliges Eckausgleichsprofil ist in Fig. 3 strichliniert dargestellt.

Fig. 4 zeigt neben der Einbausituation Boden-Wand-Anschluss einer weitere Einbausituation, in welcher die Wanne eine Ecke eines Bodens 4 gesetzt wird (Boden-Boden-Anschluss). In dieser Situation werden die beiden Wannendichtbänder 1', 1" an der Unterseite des Wannenrands 2 befestigt, so dass sie im Eckbereich überlappen. Beim oben liegenden Wannendichtband 1' wird (analog zur Situation bei Boden-Wand-Anschluss) die erste, untere Abziehfolie 31 teilweise - um 3 bis 5 cm - abgezogen und abgeschnitten, um einen entsprechenden Bereich des ersten, unteren Bereichs 33 der rückseitigen Kleberschicht 30 freizulegen. Die zweite, obere Abziehfolie 32 wird entsprechend ebenfalls teilweise abgezogen. Das unten liegende Wannendichtband 1" wir nun mit der freiliegenden rückseitigen Kleberschicht 30 des oberen Wannendichtbandes 1' wasserdicht verklebt. Anschliessend werden bei beiden Wannendichtbändern 1', 1" die zweiten, oberen Abziehfolien 32 vollständig abgezogen, um die jeweiligen zweiten, oberen Bereiche 14 der Wannendichtbänder 1', 1" an den jeweiligen Anschlussflächen des Bodens 4 zu befestigen.

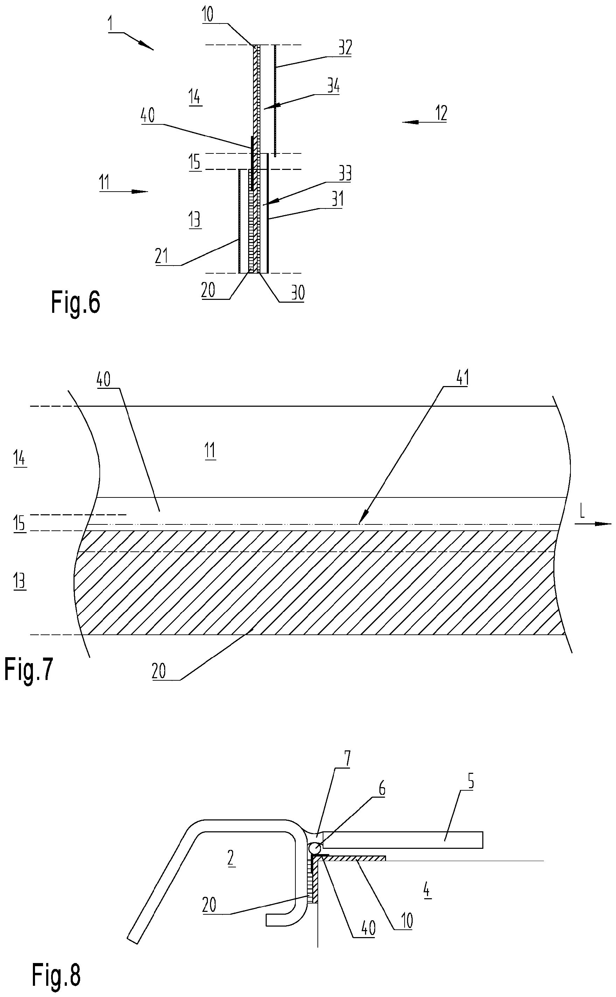

Fig. 1 zeigt weiter eine Übergangsbereich 15 des Wannendichtbandes 1, welcher zwischen dem ersten, unteren Bereich 13 und dem zweiten, oberen Bereich 14 angeordnet ist und sich ebenfalls in Längsrichtung L erstreckt. In der Einbausituation kommt der Übergangsbereich 15 im Bereich einer Fuge zwischen Wannenrand 2 und Boden- oder Wandbelag 5 zu liegen (vgl. Fig. 5 und 8). Eine solche Fuge wird mit elastischer Dichtmasse (Silikonfuge) abgedichtet. Der Übergangsbereich 15 ist auch der Bereich des Wannendichtbandes 1 bei dem die vorderseitige Verklebung zur rückseitigen Verklebung wechselt. Dieser Bereich muss entsprechen Absetzbewegungen der Wanne aufnehmen können, indem wenigstens dieser Bereiche eine Wannendichtbandes 1 dehnbar ausgestaltet ist.

Die rückseitige erste, untere Abziehfolie, welche üblicherweise am Wannendichtband 1 verbleibt, deckt neben dem ersten, unteren Bereich 13 des Wannendichtbandes 1 auch den Übergangsbereich 15 des Wannendichtbandes 1 ab. Auf diese Weise wird sichergestellt, dass der Übergangsbereich nicht an die Anschlussfläche des Gebäudes (Wand oder Boden) festgeklebt wird und so Dehnungen aufnehmen kann. Die zweite, obere Abziehfolie 32 reicht bis an den Übergangsbereich 15 und kann die erste, untere Abziehfolie 31 ein wenig überlappen, um ein Greifen und Abziehen der zweiten, oberen Abziehfolie 32 zu erleichtern.

Fig. 5 und Fig. 6 zeigen ein Wannendichtband 1 mit Schnittbeschädigungsschutz 40 im vertikalen Einbauzustand bei einem Wandanschluss (Fig. 5) und in einer teilweisen Explosionsdarstellung (Fig. 6).

Das Wannendichtband 1 in Fig. 5 ist mit der vorderseitigen Kleberschicht 20 an einer vertikalen Abbordung des Wannenrands 2 wasserdicht festgeklebt. Im Unterschied zum Wannendichtband aus Fig. 1 weist das Wannendichtband 1 in Fig. 5 und Fig. 6 zusätzlich einen Schnittbeschädigungsschutz 40 auf, welcher im Übergangsbereich 15 des Wannendichtbandes 1 angeordnet ist und beidseitig teilweise (aber nicht vollständig) in den ersten, unteren Bereich 13 sowie den zweiten, oberen Bereich 14 hineinragt. Idealerweise ist der Schnittbeschädigungsschutz so bemessen, dass er im Einbauzustand von der Vorderseite gesehen um wenige Millimeter hinter den Wandbelag 5 (Fliesen) und hinter die Wannenabbordung reicht (vgl. Fig. 5). So ist das Wannendichtband 1 auch beim Entfernen einer Silikondichtung 7 mit einem schräg angesetzten Messer zuverlässig geschützt. Eine Hinterfütterung 6 der Silikonfuge 7 - auch wenn sie aus schnittfestem Material bestehen würde - bietet keinen zuverlässigen Schutz, weil ein Messer ober- und unterhalb der Hinterfütterung 6 bis zum Trägerband 10 gelangen würde und dieses dabei zerstören.

In der gezeigten Ausführungsform der Fig. 5 und Fig. 6 ist der Schnittbeschädigungsschutz 40 am Trägerband 10 festgeklebt. Der Schnittbeschädigungsschutz kann aber auch lose zwischen Wannenrand 2 und Trägerband 10 eingelegt oder eingesetzt werden.

In der gezeigten Einbausituation der Fig. 5 ist auch erkennbar, dass die rückseitige erste, untere Abziehfolie 31 auf dem Wannendichtband 1 verbleibt, so dass das Wannendichtband bei einer Setzbewegung der Wanne entlang der Anschlusswand 3 gleiten kann. Die Bewegung kann dabei durch den dehnbaren Übergangsbereich 15 aufgenommen werden. Lediglich der zweite, obere Bereich 14 mit dem freiliegenden zweiten, oberen Bereich 34 der rückseitigen Kleberschicht 30 ist wasserdicht mit der Anschlusswand 3 verbunden.

Fig. 7 zeigt ebenfalls ein Wannendichtband 1 mit Schnittbeschädigungsschutz 40. Der Schnittbeschädigungsschutz 40 ist in dieser Ausführungsform zusätzlich mit einer Faltlinie 41 versehen. Die Faltlinie 41 ist eine Schwächung des Schnittbeschädigungsschutzes 40 in Längsrichtung L, welche in etwa mittig angeordnet ist. Sie erleichtert es, das Wannendichtband 1 inklusive Schnittbeschädigungsschutz 40 von Hand entlang der Längsrichtung L zu falten. Dies ist besonders vorteilhaft für eine Einbausituation, in welcher das Wannendichtband 1 über eine Kante eine Bodenanschlusses 4 gelegt wird, wie in Fig. 8 dargestellt. Bei einer solchen Einbausituation ist der Schnittbeschädigungsschutz 40 um 90° über die Kante des Bodenanschlusses 4 gefaltet und schützt das darunterliegende Trägerband 10 beim Entfernen einer Silikonfuge 7 zwischen Wannenrand 2 und horizontalem Bodenbelag 5.

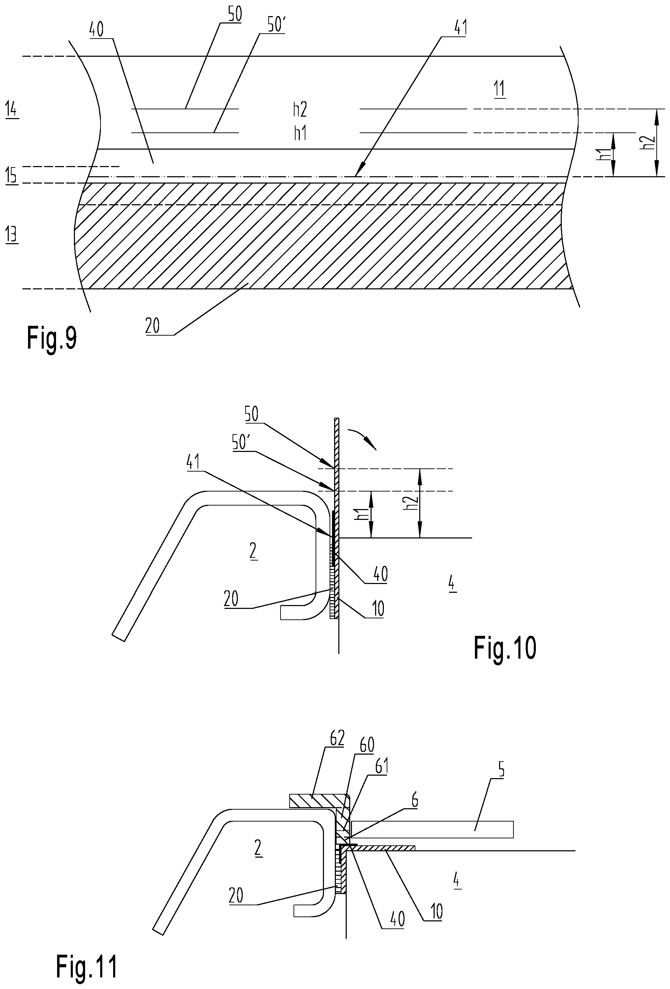

Fig. 9 zeigt das Wannendichtband 1 aus Fig. 7 mit zusätzlichen Markierungslinien 50, 50', welche vorderseitig im zweiten, oberen Bereich 14 des Wannendichtbandes 1 angeordnet sind. Die Markierungen 50', 50' sind derart positioniert, dass sie eine Distanz h1, h2 zwischen Markierungslinie 50, 50' und Faltlinie 41 angeben.

Die Markierungslinien 50, 50' dienen als Montagehilfe bei einer Einbausituation wie in Fig. 8 oder 10 gezeigt. Das Wannendichtband 1 wird derart am vertikalen Wannenrand 2 befestigt, dass die Markierung 50, 50', welche der Höhe h1, h2 zwischen Oberseite des Wannenrandes 2 und der Oberseite des Anschlussbodens 4 entspricht, bündig mit der Oberseite des Wannenrandes 2 ist. Anschliessend wird das Wannendichtband 1 entlang der Faltlinie 41 über die Kante des Bodenanschlusses 4 gelegt (Pfeil in Fig. 10) und am Bodenanschluss befestigt. Die fertige Einbausituation ist in Fig. 8 gezeigt.

In Fig. 10 ist das Wannendichtband 1 mit der Markierung 50', h1 bündig zur Oberseite des Wannenrands 2 befestigt. Die Höhe h1 gibt an, wieviel Platz für den Bodenbelag (Fliesen und Fliesenkleber) vorhanden ist.

Fig. 11 zeigt einen separaten Wannenschutz 60, wie er zum korrekten Positionieren des Wannendichtbandes Verwendung findet. Der separate Wannenschutz kann ein Band mit definierter Höhe sein, welches mit der Oberseite bündig zur Wannenoberseite am Wannenrand befestigt wird (in Fig. 11 ohne Schenkel 62). Das Wannendichtband 1 wir anschliessend unter den Wannenschutz geklebt und gefaltet, um es anschliessend am Anschlussboden 4 zu befestigen. Der Wannenschutz kann eine oder mehrere Perforationslinien 61 aufweisen, um dessen Höhe an die vertikale Distanz zwischen Wannenoberfläche und Bodenoberfläche anzupassen. Nach dem Verlegen des Bodenbelags, kann der Wannenschutz komplett entfernt werden oder ein unterer Streifen kann als Hinterfütterung für eine Silikonfuge in der Fuge verbleiben, indem er entlang einer Perforationslinie 61 vom Rest des Wannenschutzes 60 abgetrennt wird. In der gezeigten Variante weist der Wannenschutz eine zusätzlichen Schenkel 62 auf, welcher auf die Oberseite der Wanne gelegt wird und so auch die Oberseite beim Verlegen des Bodenbelags schützt.

### Bezeichnungsliste

- 1, 1', 1": Wannendichtband
- 2: Wannenrand
- 3: Anschlusswand
- 4: Anschlussboden
- 5: Wand- / Bodenbelag
- 6: Hinterfütterung
- 7: Silikonfuge
- 10: dehnbares Trägerband
- 11: wannenseitige Vorderseite
- 12: wannenabgewandte Rückseite
- 13: erster, unterer Bereich
- 14: zweiter, oberer Bereich
- 15: Übergangsbereich
- 20: vorderseitige Kleberschicht
- 21: vorderseitige Abziehfolie
- 30: rückseitige Kleberschicht
- 31: erste, untere rückseitige Abziehfolie
- 32: zweite, obere rückseitige Abziehfolie
- 33: erster, unterer Bereich der rückseitigen Kleberschicht
- 34: zweiter, oberer Bereich der rückseitigen Kleberschicht
- 40: Schnittbeschädigungsschutz
- 41: Faltlinie
- 50, 50': Markierungslinie
- 60: Wannenschutz
- 61: Perforationslinie
- 62: Schenkel
- L: Längsrichtung
- h1: Höhe
- h2: Höhe

## Patentansprüche

1. Wannendichtband (1) zum Abdichten eines Wannenrands (2) einer Dusch- oder Badewanne gegenüber einer Anschlusswand (3) und/oder einem Anschlussboden (4), umfassend
ein dehnbares Trägerband (10) mit einer wannenseitigen Vorderseite (11) und einer wannenabgewandten Rückseite (12);
wobei das Wannendichtband (1) einen ersten, unteren Bereich (13) und einen zweiten, oberen Bereich (14) definiert, die sich in Längsrichtung (L) erstrecken und wobei der erste, untere Bereich (13) etwa ein Fünftel bis etwa die Hälfte des Wannendichtbandes (1) ausmacht;
wobei das Wannendichtband (1) auf der wannenseitigen Vorderseite (11) im ersten, unteren Bereich (13) eine vorderseitige Kleberschicht (20) zur Befestigung des Wannendichtbands (1) am Wannenrand (2) aufweist;
wobei die vorderseitige Kleberschicht (20) mit einer abziehbaren, vorderseitigen Abziehfolie (21) versehen ist;
wobei das Wannendichtband (1) auf der wannenseitigen Vorderseite (11) im zweiten, oberen Bereich (14) keine vorderseitige Kleberschicht aufweist;
**dadurch gekennzeichnet, dass**
das Wannendichtband (1) eine rückseitige Kleberschicht (30) aufweist, welche sich über die gesamte Rückseite des Wannendichtbands (1) erstreckt; und
dass die rückseitige Kleberschicht (30) mit einer ersten, unteren abziehbaren Abziehfolie (31) und einer separaten zweiten, oberen abziehbaren Abziehfolie (32) versehen ist, die jeweils den ersten, unteren Bereich (13) des Wannendichtbandes (1) respektive den zweiten, oberen Bereich (14) des Wannendichtbandes (1) abdecken, und wahlweise vom Wannendichtband (1) abziehbar sind, um einen ersten, unteren Bereich (33) der rückseitigen Kleberschicht (30) resp. einen zweiten, oberen Bereich (34) der rückseitigen Kleberschicht (30) freizugeben.

2. Wannendichtband nach Anspruch 1, **dadurch gekennzeichnet, dass** das Wannendichtband (1) zwischen dem ersten, unteren Bereich (13) und dem zweiten, oberen Bereich (14) einen Übergangsbereich (15) aufweist, welcher keine vorderseitige Klebefläche aufweist.

3. Wannendichtband nach Anspruch 2, **dadurch gekennzeichnet, dass** die rückseitige erste, untere Abziehfolie (31) den Übergangsbereich (15) abdeckt.

4. Wannendichtband nach Anspruch 2 oder 3, **dadurch gekennzeichnet, dass** die rückseitige zweite, obere Abziehfolie (32) die rückseitige erste, untere Abziehfolie (31) um etwa einen Millimeter überlappt.

5. Wannendichtband nach einem der Ansprüche 2 bis 4, **dadurch gekennzeichnet, dass** das Trägerband (10) im Übergangsbereich (15) und wenigstens in an den Übergangsbereich (15) angrenzenden Abschnitten des ersten, unteren Bereichs (13) und des zweiten, oberen Bereichs (14) wasserdicht ist.

6. Wannendichtband nach einem der vorangehenden Ansprüche, **dadurch gekennzeichnet, dass** das Trägerband (10) aus einem einzigen durchgehenden, Materialstreifen oder aus mehreren miteinander überlappend verklebten oder verschweissten Materialstreifen besteht.

7. Wannendichtband nach Anspruch 6, **dadurch gekennzeichnet, dass** der Materialstreifen aus dehnbarem Material gefertigt ist oder die mehreren Materialstreifen dehnbar miteinander verklebt sind.

8. Wannendichtband nach einem der vorangehenden Ansprüche, **dadurch gekennzeichnet, dass** das Trägerband (10) vorgefertigt oder im Einbauzustand an der Vorderseite (11), an der Rückseite (12) oder zwischen überlappenden Materialstreifen mindestens ein sich in Längsrichtung erstreckendes Funktionselement ausgewählt aus der Gruppe von Schnittbeschädigungsschutz, Schallschutz, Kapillarschutz, Wannenschutz, Hinterfütterung, Vlieslagen, Aufdoppelungsband, Kompressionsband, Quellband oder Kombinationen davon aufweist.

9. Wannendichtband nach einem der vorangehenden Ansprüche, **dadurch gekennzeichnet, dass** die vorderseitige Abziehfolie (20) und/oder die rückseitige Abziehfolie (30) eine glatte, reibungsarme Oberfläche aufweist.

10. Wannendichtband nach einem der vorangehenden Ansprüche, **dadurch gekennzeichnet, dass** das Wannendichtband einen Schnittbeschädigungsschutz (40) umfasst, welcher in Längsrichtung im Übergangsbereich (15) und wenigstens in an den Übergangsbereich (15) angrenzenden Abschnitten des ersten, unteren Bereichs (13) und des zweiten, oberen Bereichs (14) angeordnet oder anordnungsbar ist, so dass Schnittbeschädigungsschutz (40) das Trägerband (10) im Übergangsbereich (15) schützt.

11. Wannendichtband nach Anspruch 10, **dadurch gekennzeichnet, dass** der Schnittbeschädigungsschutz (40) in Längsrichtung (L) eine geschwächte Faltlinie (41) aufweist, entlang welcher der Schnittbeschädigungsschutz (40) von Hand faltbar ist.

12. Wannendichtband nach einem der vorangehenden Ansprüche, **dadurch gekennzeichnet, dass** das Wannendichtband im zweiten, oberen Bereich wenigstens eine Markierung (50, 50') in Längsrichtung aufweist, welche eine vorbestimmte Höhe (h1, h2) zwischen Faltlinie (41) und Markierung (50, 50') definiert und angibt.

13. Verwendung eines Wannendichtbands (1) nach einem der vorangehenden Ansprüche zum Setzen einer Bade- oder Duschwanne, wobei das Wannendichtband (1) nach Entfernung der vorderseitigen Abziehfolie (21) mit dem vorderseitigen ersten, unteren Bereich (13) an eine Wanne geklebt wird und anschliessend mit dem rückseitigen zweiten, oberen Bereich (14) an einen Gebäudeteil geklebt wird.

14. Bausatz zum Setzen einer Bade- oder Duschwanne umfassend ein Wannendichtband (1) nach einem der Ansprüche 1 bis 12 und mindestens ein Funktionselement ausgewählt aus der Gruppe von Schnittbeschädigungsschutz (40) oder -Profil, Schallschutz, Kapillarschutz, Wannenschutz, Hinterfütterung oder Kombinationen davon aufweist.
